Europäisches Patentamt

European Patent Office

Office européen des brevets

(19)

(11) Veröffentlichungsnummer: 0 362 684
A2

(12) **EUROPÄISCHE PATENTANMELDUNG**

(21) Anmeldenummer: 89117877.4

(22) Anmeldetag: 27.09.89

(51) Int. Cl.⁵: C14C 11/00 , B32B 9/00 , B05D 7/12

(30) Priorität: 28.09.88 DE 3832822

(43) Veröffentlichungstag der Anmeldung:
11.04.90 Patentblatt 90/15

(84) Benannte Vertragsstaaten:
AT BE CH DE ES FR GB GR IT LI LU NL SE

(71) Anmelder: Schmoock, Helmuth
Büchener Weg 121
D-2058 Lauenburg/Elbe(DE)

(72) Erfinder: Schmoock, Helmuth
Büchener Weg 121
D-2058 Lauenburg/Elbe(DE)

(74) Vertreter: Heldt, Gert, Dr. Dipl.-Ing.
Neuer Wall 59 III
D-2000 Hamburg 36(DE)

(54) **Leder und Verfahren zu seiner Herstellung.**

(57) Ein Leder weist im Bereich mindestens einer seiner Oberflächen eine ein Basisleder bedeckende Beschichtung auf. Die Beschichtung besteht aus einem auf das Basisleder (2) aufbringbaren Kunststoff, dem eine seine Härte erhöhende Armierung beigegeben ist. Der Kunststoff ist auf eine ihm zugewandte Oberfläche (4) des Basisleders (2) geklebt. Die Armierung ist als ein aus Fäden bestehender Zusatz ausgebildet. Der Kunststoff kann aus einer ersten Schicht bestehen, auf die eine sie auf ihrer vom Basisleder (2) abgewandten Oberfläche abdeckenden zweite Schicht aufgebracht ist. Die erste Schicht weist beim Einlegen der Armierung eine die Armierung durchdringende niedrigviskose Konsistenz bei einer Schmelzpunkttemperatur eines die erste Schicht bildenden Materials auf.

Bei dem Verfahren zum Herstellen eines Leders wird im Bereich mindestens einer seiner Oberflächen eine ein Basisleder bedeckende Beschichtung aufgetragen. Die Beschichtung wird aus Kunststoff hergestellt, in den eine Armierung gleichmäßig verteilt wird. Diese Schicht wird aus einer ersten und einer zweiten Schicht hergestellt, von denen die erste Schicht auf das Basisleder (2) aufgetragen wird und die zweite Schicht auf eine dem Basisleder (2) abgewandte Oberfläche (7) der ersten Schicht (3) aufgetragen wird. Die zweite Schicht (6) wird auf einen Träger aufgetragen und die erste Schicht (3) auf eine dem Träger (15) abgewandte Oberfläche der zweiten Schicht (6) aufgetragen. Die ersten Schicht (3) wird mit ihrer der zweiten Schicht (6) abgewandten Oberfläche mit dem Basisleder (2) verbunden und anschließend wird der Träger von der zweiten Schicht (6) abgezogen.

# LEDER UND VERFAHREN ZU SEINER HERSTELLUNG

Die Erfindung betrifft ein Leder, das im Bereich mindestens einer seiner Oberflächen eine ein Basisleder bedeckende Beschichtung aufweist.

Darüber hinaus betrifft die Erfindung ein Verfahren zum Herstellen eines Leders, auf das im Bereich mindestens einer seiner Oberflächen eine ein Basisleder bedeckende Beschichtung aufgetragen wird.

Derartige Leder haben sich in der praktischen Erprobung bewahrt. Erhebliche Ledermengen, die einer Verwertung nicht mehr zugeführt werden konnten, weil sie Beschädigungen oder Dünnstellen aufwiesen, Spaltleder und Skyverbindungen können nunmehr einer Verwertung zugeführt werden, dabei leidet einerseits der Eindruck eines natürlichen Leders nicht und andererseits können auch relativ billige Ledersorten zu qualitativ hochstehenden Artikeln verarbeitet werden.

Dabei wird eine Lederoberfläche geschaffen, die hinsichtlich ihrer Griffigkeit und ihres Aussehens gegenüber natürlichen Lederoberflächen nicht zurücksteht. Das Leder ist weich und geschmeidig und vermittelt damit einen hautsympatischen Eindruck. Für die praktische Anwendung ist darüber hinaus jedoch wünschenswert, daß die Oberfläche kratzfest wird, um zu verhindern, daß durch mechanische Einflüsse das gute Aussehen des Leders leidet. Daüber hinaus hinaus ist eine Festigkeit gegen Schnittverletzungen sehr er wünscht.

Aufgabe der vorliegenden Erfindung ist es daher, das Leder der einleitend genannten Art so zu verbessern, daß seine Oberfläche gegen mechanische Beschädigungen weitgehend sicher ist.

Diese Aufgabe wird erfindungsgemäß dadurch gelöst, daß die Beschichtung aus einem auf das Basisleder aufbringbarem Kunststoff besteht, dem eine seiner Härte erhöhende Armierung beigegeben ist.

Durch die Beimischung der Armierung wird erreicht, daß die vom Kunststoff gebildete Oberfläche des Leders eine hohe Festigkeit gegen mechanische Beschädigungen erhält. Die dem Basisleder abgewandte Oberfläche des Kunststoffes erhält eine relativ hohe Härte, die das Eindringen von spitzen Gegenständen verhindert. Auf diese Weise ist die Oberfläche resistent gegen Kratzer und Schnitte. Das Leder kann daher auch in solchen Anwendungsfällen eingesetzt werden, in denen die Oberfläche erheblichen mechanischen Belastungen ausgesetzt ist. Trotz der eingebrachten Armierung werden die typischen Ledereingeschaften, der Griff und die Lufdurchlässigkeit, nicht negativ beeinflußt. Durch Auswahl einer atmungsaktiven Beschichtung und einer gleichmäßig verteilten Armierung bleibt das Leder luftdurchlässig und griffsymphatisch.

Gemäß einer bevorzugten Ausführungsform der Erfindung besteht die Armierung aus Fäden. Diese bewähren sich als Zusatz deswegen besonders gut, weil sie eine das Eindringen harter Gegenstände verhindernde glatte Oberfläche aufweisen. An den Oberflächen der feinverteilten Fäden gleiten die spitzen Gegenstände ab, ohne auf dem Leder eine Kratzspur zu hinterlassen. Die Vielzahl der unregelmäßig verteilten Fäden bilden eine zusammenhängende Oberfläche. Die Fäden beeinflussen einerseits den Eindruck eines qualitativ hochstehendes Leders nicht negativ und formen andererseits gemeinsam einen Abwehrschild, in den scharfe Gegenstände nicht eindringen können. Ähnliche positive Wirkungen werden erzielt mit Fasern und aus Fasern und Fäden bestehenden Gemischen.

Ein derartiges Leder konnte bisher nicht hergestellt werden, da geeignete Verfahren fehlten. Mit herkömmlichen Verfahren konnte ein Leder nicht hergestellt werden, das die gewünschten hohen Qualitäten seiner Oberflächen aufwies.

Weitere Aufgabe der vorliegenden Erfindung ist es daher, das Verfahren der einleitend genannten Art so zu verbessern, daß mit seiner Hilfe ein Leder hoher Oberflächengüte hergestellt werden kann.

Diese Aufgabe wird erfindungsgemäß dadurch gelöst, daß die Beschichtung aus einem Kunststoff hergestellt wird, in dem eine Armierung gleichmäßig verteilt wird.

Durch diese gleichmäßige Verteilung der Armierung erhält der Kunststoff nach seinem Aushärten eine Konsistenz, die sich durch eine hohe Oberflächengüte auszeichnet. Die gleichmäßige Verteilung der einzelnen die Armierung bildenden Bestandteile sorgt dafür, daß der ausgehärtete Kunststoff eine Oberfläche aufweist, in die mit harten Gegenständen mechanisch nicht eingedrungen werden kann. Dadurch wird die Kratzfestigkeit wesentlich erhöht. Durch die gleichmäßige Verteilung von Fäden, Fasern oder Gemischen von beiden wird die Festigkeit des Leders nicht negativ beeinflußt. Dafür steigt aber die Kratzfestigkeit und Schnittfestigkeit erheblich an. Die gleichmäßig verteilten Bestandteile der Armierung beeinflussen auch nicht in negativer Weise das Eindringen des Kunststoffes während seines niedrigviskosen Zustandes in die Lederoberfläche. Die Eindringtiefe des Kunststoffes in die Lederoberfläche bleibt vielmehr genau so gut erhalten, als wenn dem Kunststoff eine Armierung nicht beigemischt wäre.

Gemäß einer bevorzugten Ausführungsform der Erfindung werden die Fäden vor dem Aufbringen des Kunststoffes in diesem verteilt. Dadurch können Maschinen zum Durchmischen des Kunststoffes Verwendung finden, die dafür sorgen, daß die Fäden im Kunststoff gleichmäßig verteilt werden. Auf diese Weise ist für eine gleichmäßige Härte der gesamten Lederoberfläche gesorgt. Dabei wird die Struktur des Leders erhalten und die Atmungsaktivität der Schichten erhöht.

Nach einer weiteren bevorzugten Ausführungsform der Erfindung werden die Fäden nach dem Aufbringen des Kunststoffes in diesem verteilt. Diese Methode wird insbesondere dann gewählt, wenn die Fäden in irgendeiner Weise miteinander verbunden werden, beispielsweise in Form von Gelegen, Geweben, Gewirken oder Vließen. Diese werden entweder unmittelbar auf die Lederoberfläche gelegt, bevor der Kunststoff aufgebracht wird. Im Regelfall drückt sich dann der Kunststoff, beispielsweise ein hot melt durch die miteinander verbundenen Fäden hindurch. In anderen Fällen können die miteinander verbundenen Fäden jedoch auch auf die bereits auf die Lederoberfläche aufgebrachte Kunststoffmasse aufgelegt werden, so daß sie durch diese hindurch in Richtung auf das Basisleder sinken, bis sie auf ihrer gesamten Fläche in den Kunststoff eingetaucht sind. Auf diese Weise ist der Kunststoff gestaltbar, ohne daß die eingelegten Fäden das in die Kunststoffoberfläche eingeprägte Ledermuster beeinträchtigen. Auch die Griffigkeit des Leders leidet durch die Einlage der Fäden nicht. Selbst Fäden hoher Festigkeit, beispielsweise Stahl- oder Glasfäden, beeinflussen die griffsympatischen typischen Ledermerkmale nicht. Andererseits ermöglichen diese Fasern hoher Festigkeit die Herstellung von Artikeln, die hohen mechanischen Beanspruchungen ausgesetzt sind, beispielsweise die Herstellung von Arbeitshandschuhen und Arbeitsbekleidung. Die Kratz- und Scheuerfestigkeit des Leders steigt durch die Beigabe der Fäden bis auf den 20-fachen Wert üblicher Ledersorten. Die Reißfestigkeit des Leders nimmt in starkem Maße zu.

Weitere Einzelheiten der Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:

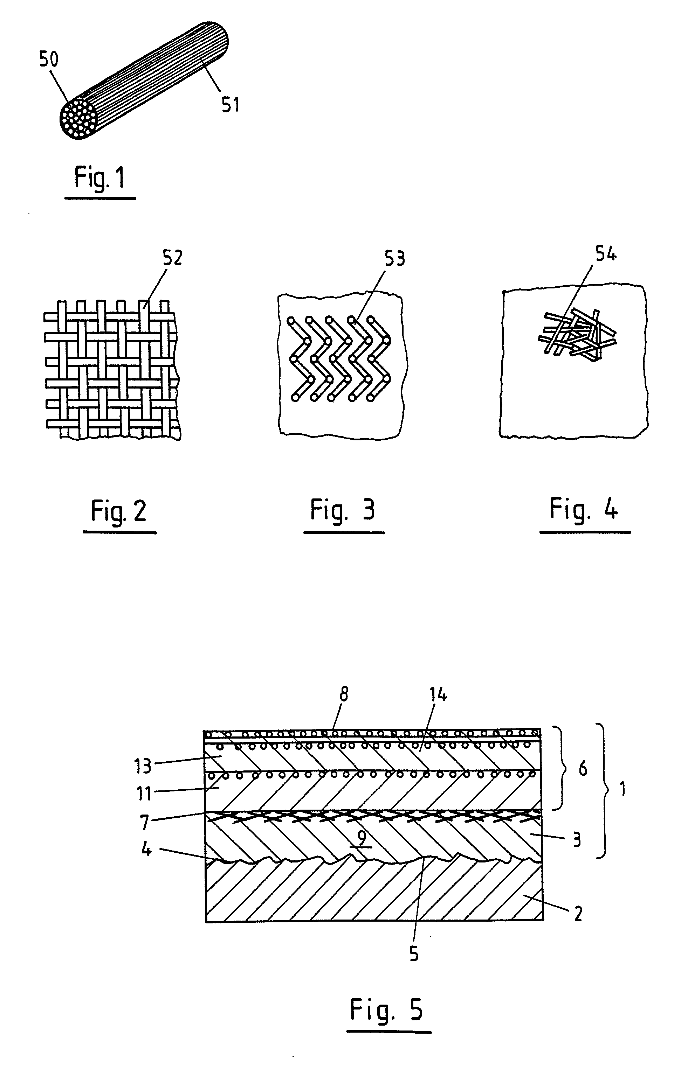

Fig. 1: Eine perspektivische Darstellung einer Stapelfaser,

Fig. 2: eine Draufsicht auf ein Gewebe,

Fig. 3: eine Draufsicht auf ein Gewirke,

Fig. 4: eine Draufsicht auf ein Vließ,

Fig. 5: einen Querschnitt durch ein mit einer Deckschicht beschichtetes Basisleder,

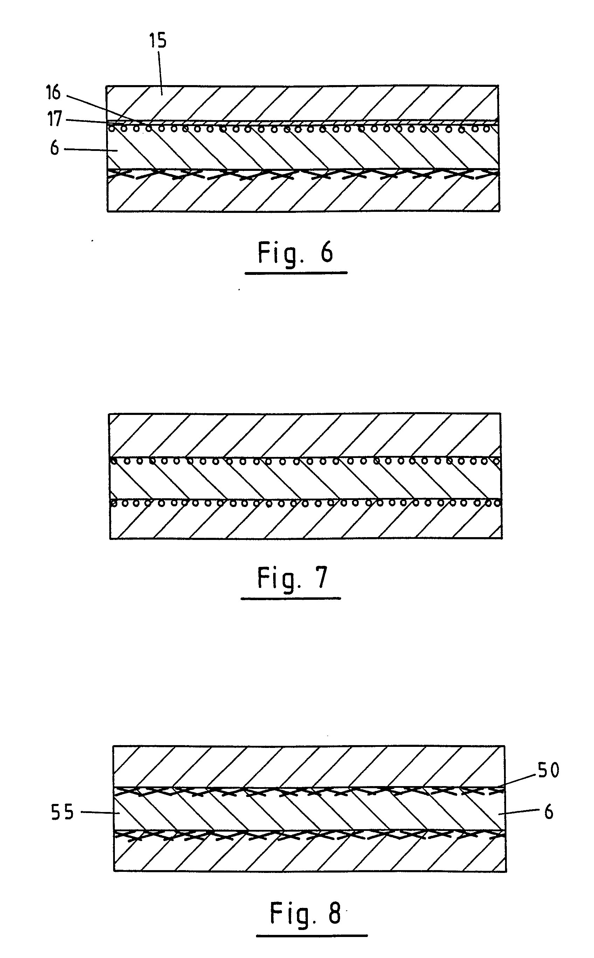

Fig. 6: einen Querschnitt durch eine Trägerfolie mit 2 auf ihr haftenden Kunststoffschichten,

Fig. 7: einen Querschnitt durch eine Trägerfolie mit 2 weiteren auf ihr haftenden Kunststoffschichten,

Fig. 8: einen Querschnitt durch eine Trägerfolie mit auf ihr haftenden anderen Kunststoffschichten,

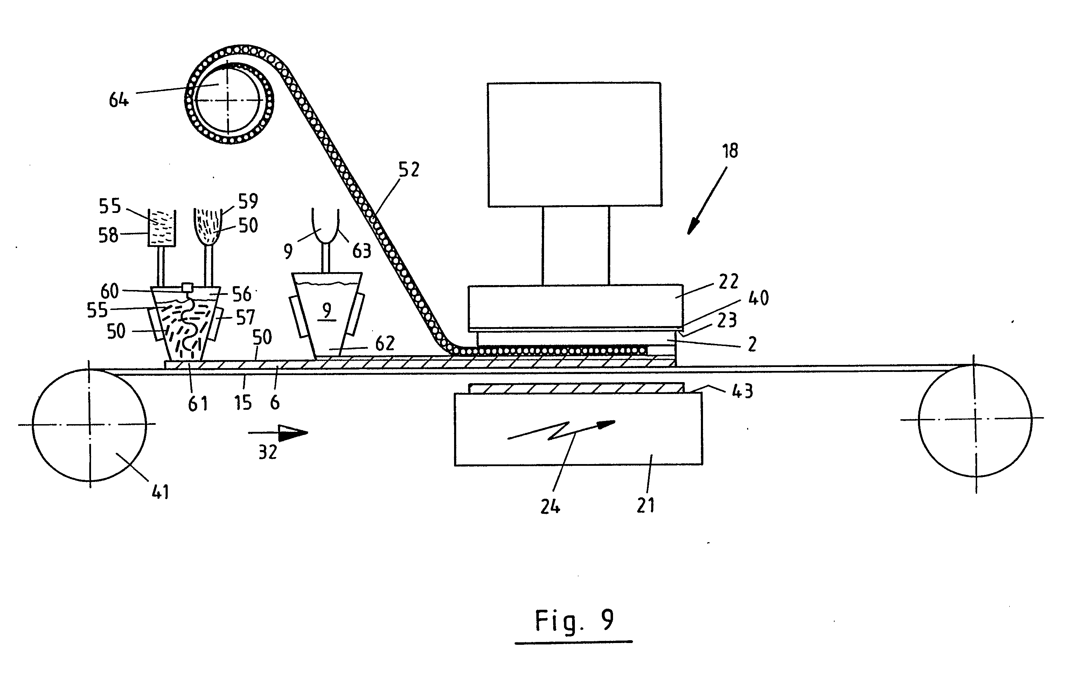

Fig. 9: eine schematische Darstellung einer Beschichtungsanlage und

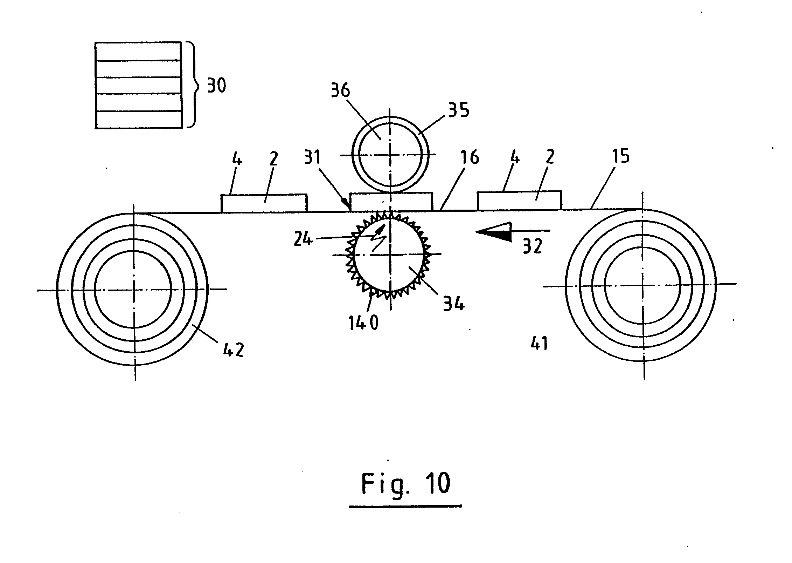

Fig. 10: eine schematische Darstellung einer anderen Beschichtunganlage.

Ein Leder besteht im wesentlichen aus einer Deckschicht (1) und einem Basisleder (2). Die Deckschicht ist auf eine, das Basisleder (2) begrenzende Basislederoberfläche (4) aufgetragen. Sie kann bestehen aus einer Ausgleichsschicht (3) und einer Abdeckschicht (6). Die Ausgleichsschicht (3) ist unmittelbar auf die Basislederoberfläche (4) aufgetragen, während die Abdeckschicht (6) auf eine der Basislederoberfläche (4) abgewandte Ausgleichsschichtoberfläche (7) aufgetragen ist. Die Ausgleichsschicht (6) gleicht natürliche Unebenheiten (5) aus, die in der Basislederoberfläche (4) vorhanden sind.

Die Ausgleichsschicht (3) wird in Form eines Ausgleichssubstrates (9) auf die Basislederoberfläche (4) aufgebracht. Dieses Ausgleichssubstrat kann als ein Ausgleichspulver ausgebildet sein oder als eine Lösung, die beispielsweise auf die Basislederoberfläche (4) aufgesprüht wird. Das Ausgleichssubstrat (9) ist als ein Thermoplast, beispielsweise als hot melt, ausgebildet, der thermisch aktivierbare Klebeeigenschaften aufweist. Auch kann das Ausgleichssubstrat (9) in Form einer Dispersion aufgetragen werden, deren wässriger Anteil nach dem Auftrag verdampft wird, bevor das Ausgleichssubstrat (9) mit der Basislederoberfläche (4) verpreßt wird. Schließlich kann das Ausgleichssubstrat aus einer Schaumfolie oder einem schäumenden Kunststoff bestehen. In dieser Form wird das Ausgleichssubstrat zweckmäßigerweise auf die zu beschichtende Oberfläche (4) des Basisleders (2) geklebt. Ein dazu verwendbarer Kleber kann als schäumender Kunststoff ausgebildet sein. Er trägt dazu bei, daß der gute Griff des Leders erhalten bleibt und die gesamte Beschichtung eine günstige Atmungsaktivität besitzt.

Die Abdeckschicht (6) wird im Regelfall als eine einheitliche Schicht ausgebildet sein. Es ist jedoch auch möglich, die Abdeckschicht (6) aus übereinander angeordneten Teilabdeckschichten (11, 13) auszubilden. Dabei kann eine der beiden Teilabdeckschichten (14) als eine Farbschicht (14) ausgebildet sein, die beispielsweise aus einem Polyurethanlack besteht. Es ist aber auch möglich, die Teilabdeckschicht (13) aus einem Acrylat Polyamid oder Aceto-Butyrat auszubilden.

Das Basisleder (2) kann als ein Spaltleder ausgebildet sein. Es ist jedoch auch möglich, andere Lederarten, insbesondere solche minderer Qualität, zu verwenden. Dabei kommen Leder von Schweinen, Rindern, Ziegen, Schafen oder anderen Tieren mit verwertbaren Häuten in Betracht, die mit der Deckschicht (1) versehen werden. Zur Verwendung gelangen in erster Linie Ledersorten mit stark beschädigten Narben, Spaltleder und Skyverbindungen.

Die Abdeckschicht (6) und die Ausgleichsschicht (3) werden unmittelbar auf die Basisoberlederfläche (4) aufgebracht. Es ist aber auch möglich, mindestens die Abdeckschicht (6) auf einen Träger (15) aufzubringen und von diesem auf die Ausgleichsschicht (3) aufzubringen, die bereits auf der Basilederoberfläche (4) haftet. Die Abdeckschicht (6) wird vom Träger (15) auf die mit Basisleder (2) verbundene Ausgleichsschicht (3) aufgebracht. Im Anschluß daran wird der Träger (15) von der Abdeckschicht (6) abgezogen, während diese auf der Ausgleichsschicht (3) haftet. Es ist jedoch auch möglich, sowohl die Abdeckschicht (6) als auch die Ausgleichsschicht (3) auf dem Träger (15) anzuordnen und gemeinsam auf die Basislederoberfläche (16) aufzubringen. In diesem Falle ist die Abdeckschicht (6) unmittelbar auf einer dem Basisleder (2) zugewandten Trägeroberfläche (16) angeordnet. Darüber hinaus kann zwischen der Trägerober- fläche (16) und der Abdeck schicht (6) eine Trennschicht (17) vorgesehen sein, die ein leichtes Ablösen der Abdeckschicht (6) vom Träger (15) ermöglicht. Die Trennschicht (17) kann als ein Trennlack ausgebildet sein.

Der Träger (15) ist als Kunststoff-Folie, beispielsweise Polyester, Polyamid, Polycarbonat, Polypropylen oder orientiertes Polypropylen ausgebildet. Es ist aber auch möglich, den Träger (15) aus Papier oder Metall, beispielsweise Aluminium, herzustellen. Schließlich kann der Träger (15) auch aus einer Kombination eines Kunststoffes mit einem Metall bestehen.

Die Abdeckschicht (6) ist farbig ausgebildet. Es ist aber auch möglich, die Abdeckschicht (6) farblos, transparent oder pigmentiert zu gestalten. Darüber hinaus ist es möglich, der Abdeckschicht (6) eine den Griff des Leders verbessernde Gestaltung zu geben.

Zur Verbesserung der mechanischen Festigkeit insbesondere der Kratz- und Schnittfestigkeit ihrer dem Basisleder (2) abgewandten Oberfläche (8) ist es möglich, in die Abdeckschicht (6) eine Armierung einzubringen. Diese kann in Form von Fäden (50) oder Fasern, z. B. Stapelfasern (51) oder aus Gemischen aus Fäden (50) und Fasern ausgebildet sein. Es ist auch möglich, mehrere Fäden (50) miteinander zu verbinden, beispielsweise in Form eines Gewebes (52), eines Gewirkes (53), eines Vließes (54) oder eines Geleges. Die Fäden (50) oder die Fasern können aus Polyamid, Polyester, Cellulose, regenerierter Cellulose, einem als aromatisches Polyamid ausgebildeten Asbestersatz oder aus Asbest bestehen. Es ist jedoch auch möglich, die Fäden aus Stahl, Edelstahl, Glas oder Kieselsäure herzustellen. Die Auswahl der Materialien erfolgt je nach dem Verwendungszweck herzustellenden Leders. Entscheidend ist, daß das zur Herstellung der Armierung verwendete Material einen Schmelzpunkt aufweist, der oberhalb eines Kunststoff vorgegebenen Erweichungsbereich liegt.

Die die Armierung bildenden Fasern, die auch als native Fasern ausgebildet sein können, Fäden (50) oder Gemische aus Fasern und Fäden (50) werden fein verteilt in ein die Abdeckschicht (6) bildenes Abdeckschichtsubstrat (55) eingebracht. Es ist jedoch auch möglich, die Armierung in die Ausgleichsschicht (3) oder sowohl in die Ausgleichsschicht (3) als auch in Abdeckschicht (6) einzubringen. Bei Verwendung einer nicht metallischen Armierung genügt bereits ein Anteil von 2 bis 15 % des Gewichts vom Kunststoff, vorzugsweise 5 Gewichtsprozent von einem entweder die Abdeckschicht (6) oder die Ausgleichsschicht (3) bildenden Subtrat, um eine sehr hohe Kratzfestigkeit und Schnittfestigkeit der Oberfläche (8) herbeizuführen. Die gleichmäßige Verteilung der Fäden (50), Fasern bzw. Gemische von Fäden (50) und Fasern im jeweiligen Substrat kann beispielsweise in einer Aufschnelzanlage, z. B. in einem Extruder erfolgen, in dem das entsprechende Substrat von einer Heizung (57) auf eine Temperatur erhitzt wird, bei der es für seine Verarbeitung und Aufbringung auf den Träger (15) die richtige Viskosität besitzt. Zu diesem Zwecke wird beispielsweise das Abdecksubstrat (55) in den Extruder (56) über eine Eingabevorrichtung (58) eingegeben. Darüber hinaus werden in den Extruder (56) auch die Fäden (50) über eine andere Eingabevorrichtung (59) eingegeben. Innerhalb des Extruders (56) erfolgt eine Durchmischung des Abdeckschichtsubstrats (55) mit den Fäden (50). Dazu steht eine Mischvorrichtung (60) zur Verfügung, die beispielsweise aus zwei ineinander greifenden Rechen besteht, die sich gegenseitig durchkämmen.

Nach der Einbringung der Fäden (50) und gegebenenfalls der Fasern bzw. der Gemische aus Fasern und Fäden (50) in das Abdeckschichtsubstrat (55) wird ein auf diese Weise entstehendes Gemisch (61) auf den von einer Ab wickelspule (41) abgewickelten Träger (15) aufgebracht. Auf diese Weise wird auf dem Träger (5) eine Abdeckschicht (6) aufgebracht, innerhalb der das die Armierung bildende Material aus Fäden (50), Fasern bzw. Gemischen aus beiden gleichmäßig verteilt ist. In Förderrichtung (32) des Trägers (15) mündet auf diesen ein weiterer Extruder (62), in dem das Ausgleichssubstrat (9) aufbereitet wird. Dieses Ausgleichssubstrat (9) befindet sich innerhalb einer Eingabevorrichtung (63), aus der das Ausgleichssubstrat (9) in den Extruder (62) gelangt. Innerhalb des Extruders (62) kann dem Ausgleichssubstrat (9) die Armierung beigemischt werden, die in den Extruder (62) über eine nicht dargestellte Eingabevorrichtung beigegeben wird. Es ist jedoch auch möglich, ausschließlich das Ausgleichssubstrat (9) über den Extruder (62) auf die auf dem Träger (15) befindliche Abdeckschicht (6) aufzugeben und anschließend in die sich im niedrigviskosen Zustand befindliche Ausgleichsschicht (3) ein aus Fäden (50) bestehendes Gewebe (52) einzulegen, das von einer Abwickelrolle (64) abgewickelt wird. Nach dem Einbringen des Gewebes (52) gelangt der Träger (15) zusammen mit der Abdeckschicht (6) und der Ausgleichsschicht (3) unter eine Presse (18), mit deren Hilfe die beiden Schichten (3, 6) miteinander und dem Träger (15) verpreßt werden. Dabei kann als Ausgleichssubstrat (9) auch eine Schaumfolie oder ein Schaumstoff Verwendung finden. Die Schaumfolie wird zweckmäßigerweise mit einem Kleber, beispielsweise einem schäumenden Kleber auf die zu beschichtende Oberfläche (4) des Basisleders (2) geklebt. Bei Verwendung eines schäumenden Kunststoffes wird dieser beispielsweise von einem Extruder fein auf die Oberfläche (4) geschäumt. Bevor der dadurch entstehende Schaumteppich unter der Presse (18) mit der Oberfläche (4) verpreßt wird, wird zunächst das die Armierung bildende Material in den Schaumteppich eingebracht, z. B. in Form eines Fadengeleges.

Dabei ist der Träger (15) im Bereich seiner Trägeroberfläche (16) im wesentlichen eben ausgebildet. Es ist aber auch möglich, den Träger (15) mit einer Prägung zu versehen, die der Oberflächenstruktur eines darzustellenden Leders nachgebildet ist. Dazu kann beispielsweise ein strukturiertes Papier Verwendung finden, das mit einer trennenden Schicht, beispielsweise einer Silikonschicht versehen ist.

Die Beschichtung des Basisleders (2) mit der Deckschicht (1) erfolgt im Beschichter (18), der eine in Richtung auf ein Widerlager (21) bewegliche Andruckfläche (23) aufweist. Das Widerlager (21) besitzt eine Anlagefläche (43), die der Andruckfläche (23) zugewandt ist. Zwischen der Andruckfläche (23) und der Anlagefläche (43) wird das Basisleder (2) mit einem die Deckschicht (1) ausbildenden Deckschichtsubstrat (20) verpreßt. Zu diesem Zwecke ist der Beschichter (18) als eine Presse (22) ausgebildet, deren Andruckfläche (23) in Richtung auf das Widerlager (21) verstellbar ist. Auf dem Widerlager (21) ist eine das Deckschichtsubstrat (20) erhitzende Heizung (24) vorgesehen, mit deren Hilfe das Deckschichtsubstrat (20) auf einer seine Verarbeitung ermöglichenden Temperatur gehalten wird.

Auf den Träger (15) wird zunächst die Abdeckschicht (6) und anschließend die Ausgleichsschicht (3) aufgebracht. Dabei kann je nach dem Verwendungszweck des produzierten Leders die Armierung aus Fäden (50), Fasern oder Gemischen aus beiden entweder in die Ausgleichsschicht (3) oder die Abdeckschicht (6) oder in beide eingebracht werden. Es ist darüber hinaus auch möglich, entweder in die Ausgleichsschicht (3) oder in die Abdeckschicht (6) oder in beide die Fäden (50) in Form von Geweben (52), Gewirken (53) oder in Form von Vliesen einzubringen. In jedem Falle dringen die die einzelnen Schichten (3, 6) ausmachenden niedrigviskosen Kunststoffe in Richtung auf das Basisleder (2) durch die eingebrachte Armierung hindurch, so daß diese sich im Bereich der jeweiligen Schichtoberflächen (7, 8) ansammelt und dort zu einer bedeutenden Erhöhung der Härte beiträgt, die das Leder gegen mechanische Verletzungen, beispielsweise Kratz- und Schnittspuren, unempfindlich macht.

Auf den Träger (15) wird zunächst die Abdeckschicht (6) und anschließend die Ausgleichsschicht (3) aufgebracht. Es ist möglich, nur eine dieser beiden Schichten (3, 6) mit einer Armierung zu versehen. Darüber hinaus kann der Träger (15) zunächst mit einer Trennschicht (17) versehen werden, auf die die Abdeckschicht (6) und anschließend die Ausgleichsschicht (3) aufgebracht wird. Es ist jedoch auch möglich, auf den Träger (15) nur die Abdeckschicht (6) aufzubringen, wobei abhängig von der Qualität des verwendeten Trägers (15) entweder vor Aufbringen der Abdeckschicht (6) eine Trennschicht auf dem Träger (15) verteilt wird oder nicht.

Anschließend wird der Träger (15) in den Bereich des Basisleders (2) geführt, das unter der Presse (22) liegt. Die Presse (22) preßt das Basisleder (2) gegen den auf dem Widerlager (21) aufliegenden Träger (15) und verbindet dabei die Ausgleichsschicht (3) mit der Abdeckschicht (6) und beide gemeinsam mit dem Basisleder (2). Das Widerlager (21) der Presse (18) ist dabei aufgeheizt und sorgt für eine zum Verpressen der Schichten (3, 6) notwendige Arbeitstemperatur. Das Widerlager (21) wird abhängig von der Andruckzeit auf einer Temperatur gehalten, die im Bereich zwischen 120 - 140 Grad C. gehalten wird. Es ist aber auch möglich, andere dem Ausgleichsschichtmaterial angepaßte Temperaturen vorzusehen. Der Preßdruck weist einen Wert im Intervall von 20 - 50 Kp/cm2 auf. Es ist aber auch möglich, in Abhängigkeit vom Basisleder (2) und vom Ausgleichsschichtmaterial andere Preßdrucke vorzu nehmen. Die Verpressung beansprucht einen Zeitraum von 3 - 8 Sekunden. In Abhängigkeit von den verwendeten Materialien können aber auch andere Preßzeiten vorgesehen werden.

Die Ausgleichsschicht (3) kann beispielsweise pulverförmig oder filmartig aufgetragen werden. Als Ausgleichsschicht (3) kann ein Polyuretan gewählt werden. Darüber hinaus kann das Polyuretan aber auch aus einer heißen Schmelze aufgetragen werden und mit oder ohne Einfluß der Luftfeuchtigkeit an der Luft aushärten.

Zur Herstellung der Fäden (5O) können verschiedene Materialien Verwendung finden. Beispielsweise können die Fäden (5O) aus organischen oder aus anorganischen Produkten bestehen. So können die Fäden (5O) beispielsweise aus Wolle, Baumwolle oder chemischen Materialien hergestellt werden. In Betracht kommen insbesondere Polyakryl, Polyester, Polypropylen, Polyamid und Cellulose bzw. regenerierte Cellulose oder Mischungen aus verschiedenen Bestandteilen. Darüberhinaus können die Fäden auch aus anorganischen Materialien hergestellt werden, beispielsweise aus Asbest, Stahl, Edelstahl, Metallen, Glas und Kieselsäure. Die Fäden besitzen eine Länge von 2 - 8 mm, vorzugsweise 4 - 6 mm. Sie weisen eine Feinheit auf, die zwischen 2 und 15 d tex und vorzugsweise zwischen 2 und 4 d tex besitzen. Zweckmäßigerweise werden die Fäden in Form von Stapelfasern (51) ausgebildet. Sie besitzen einen Schmelzpukt, der oberhalb des Erweichungspunktes liegt, bei dem die Kunststoffe schmelzen, aus denen die Ausgleichsschicht (3) einerseits und die Abdeckschicht (6) andererseits bestehen.

Bei der Herstellung der Ausgleichsschicht (3) müssen die jeweils vorhandenen Eigenschaften des Leders einerseits und die gewünschte Aufmachung des Endproduktes andererseits Berücksichtigung finden. Bei einem Auftrag der Ausgleichsschicht (3) auf ein glattes Leder mit geringen Beschädigungen wird zweckmäßigerweise eine Menge von 2O bis 35 gr/cm2 gewählt. Bei einem stark genarbten Leder, das die im Lederhandel üblichen Beschädigungen aufweist, wird zweckmäßigeweise eine Menge von 25 bis 4O gr/cm2 aufgetragen. Zur Verfeinerung von Schweinsleder wird zweckmäßigerweise ebenfalls eine Menge von 25 bis 4O gr/cm2 aufgetragen. Demgegenüber benötigt ein normales Spaltleder mit starken Beschädigungen eine Menge von 4O bis 5O gr/cm2, um eine ebene Oberfläche herstellen zu können.

Um diese Ausgleichsschicht (3) fest mit dem Basisleder (2) zu verbinden, wird mit Druck und Temperatur auf das Ausgleichssubstrat (9) eingewirkt. Dazu wird zweckmäßigerweise eine Temperatur von 13O Grad C gewählt, mit der 3 sec lang auf die mit dem Basisleder (2) zu verpressende Ausgleichsschicht (3) eingewirkt wird. Darüber hinaus ist es möglich, eine Temperatur von 125 Grad C zu wählen, mit der 4 - 5 sec lang auf das Basisleder (2) eingewirkt wird. Schließlich ist es denkbar, bei einer Temperatur von 120 Grad C 8 sec. lang auf die Ausgleichsschicht (3) einzuwirken. Dabei wird zweckmäßigerweise ein Druck verwendet, der mindestens 20 Kp/cm2 beträgt.

Bei der Übertragung der Ausgleichsschicht (3) und der Abdeckschicht (6) von einem Träger (15) auf das zu beschichtende Basisleder (2) wird zweckmäßigerweise der Träger (15) zunächst auf seiner beim Verpressen dem Basisleder (2) zugewandten Oberfläche mit einer Trennschicht beispielsweise aus Silikon versehen. Vorzugsweise wird ein Trennlack benutzt, der die Trageeigenschaften und den Griff verbessert. Auf diese Silikonschicht wird anschließend die Abdeckschicht (6) aufgetragen. Allerdings kann zwischen der Trennschicht (17) und der Abdeckschicht (6) noch ein Druck, beispielsweise ein Tiefdruck vorgesehen sein. Dieser kann ein- oder mehrfarbig vorgesehen sein. Zum Auftragen der Abdeckschicht (6) können je nach der Konsistenz des Abdeckmaterials verschiedene Auftragmethoden Verwendung finden; beispielsweise kann die Abdeckschicht (6) aufgewalzt oder aufgestrichen werden. Darüber hinaus können auch andere Auftragsweisen Anwendung finden.

Sodann wird auf die Abdeckschicht (6) die Ausgleichsschicht (3) aufgebracht. Auch dabei können verschiedene Beschichtungsmethoden Verwendung finden, beispielsweise Aufstreichen, Aufwalzen oder Aufextrudieren. Wird beispielsweise die Ausgleichsschicht (3) aus einer Dispersion auf die Abdeckschicht (6) aufgebracht, beispielsweise durch Verdampfen des wäßrigen Anteils, so wird die Dispersion zweckmäßigerweise aufgestrichen. Um eine feste Ausgleichsmasse aus der heißen Phase auf die Abdeckschicht (6) zum Zwecke der Erzeugung einer Ausgleichsschicht (3) aufzubringen, kann das die Ausgleichsschicht (3) bildende Substrat mit Hilfe einer beheizten Breitschlitzdüse auf die Abdeckschicht (6) aufgefahren werden. Darüber hinaus ist es auch möglich, zum Auftragen der Ausgleichsschicht (3) das Ausgleichssubstrat (9) auf die Abdeckschicht (6) aufzuwalzen oder aufstreichen.

Je nach der gewünschten Oberflächenstruktur des Endproduktes kann zum Verpressen des beschichteten Trägers (15) mit dem Basisleder (2) eine den Preßdruck auf den Träger (15) übertragende Druckfläche Verwendung finden, die entsprechend der gewünschten Oberflächenstruktur des Endproduktes gestaltet ist. So kann beispielsweise eine Andruckfläche (23) einer Tischpresse (22) eine glatte Oberfläche aufweisen, wenn das Endprodukt eine glatte Oberfläche besitzen soll. Eine derartige glatte Oberfläche kann beispielsweise benutzt werden, zur Herstellung eines Lackleders. Falls jedoch das Endprodukt eine genarbte Oberfläche besitzen soll, so wird bei der Tischpresse (22) eine mit Narben versehene Narbenplatte (40) Verwendung finden, mit deren Hilfe die auf der Narbenplatte (40) vorgesehene Narbung auf die Ausgleichsschicht (3) übertragen wird. Je nach der zu erzeugenden Narbung kann diese beim Verpressen des Trägers (15) erzeugt werden, wenn die Ausgleichsschicht (3) mit dem Basisleder (2) verbunden wird. Bei einer tiefen Narbung, bei der beispielsweise erhebliche Höhenunterschiede auftreten können, wie beispielsweise Straußenleder oder Krokodilsleder werden zweckmäßigerweise zwei Pressungen durchgeführt, von denen die erste dem Verpressen der Ausgleichsschicht (3) mit dem Basisleder (2) dient, während bei der zweiten Pressung nach Entfernen des Trägers (15) die Narbung erzeugt wird. Darüber hinaus kann die Narbung auch mit einem entsprechend geformten Träger (15) erzeugt werden, beispielsweise einem mit einer Narbung versehenen Trägerpapier, dessen der Abdeckschicht (6) zugewandte Oberfläche silikonisiert ist. Zu diesem Zwecke kann der Träger (15) eine glatte oder matte Oberfläche besitzen, je nachdem, ob ein glattes oder mattes Leder erzeugt werden soll.

Bei einem Träger (15), auf dem lediglich die Abdeckschicht (6) angeordnet ist, wird durch die Temperatur des Widerlagers (21) eine Klebereigenschaft einer sich bereits auf dem Basisleder (2) befindlichen Ausgleichsschicht (3) aktiviert und diese mit dem Basisleder (2) verbunden. Durch das Aktivieren wird die Ausgleichsschicht (3) zunächst pastös und verschwimmt bei einem Druck von 40 bis 80 Kp/cm2. Die pastös gewordene Ausgleichsschicht (3) dringt in die Basislederoberfläche (4) ein und egalisiert die Narbung des Basisleders (2). Außerdem gleicht die pastös gewordene Ausgleichsschicht (3) innerhalb der Basislederoberfläche (4) sich befindliche fehlerhafte Stellen aus. Im pastösen Zustand der Ausgleichsschicht (3) erfolgt darüber hinaus eine Gestaltung der Ausgleichsschichtoberfläche (7) bzw. der Deckschichtoberfläche (33) mit Hilfe einer den Druck auf die Deckschicht (1) aufbringenden Narbenplatte (40). Gegebenenfalls kann auch die Trägeroberfläche (16) eine die Deckschichtoberfläche (33) gestaltende Formgebung aufweisen. Die Auffüllung der sich auf der Basislederoberfläche (4) befindlichen Unebenheiten (5) erfolgt aufgrund der Masse der Ausgleichsschicht (3), die die Unebenheiten (5) auffüllt und darüber hinaus eine Gestaltung der Ausgleichsschichtoberfläche (7) ermöglicht. Dabei ist die Masse der Ausgleichsschicht (3) so zu wählen, daß unabhängig von der Größe der Unebenheiten (5) in jedem Fall eine gewünschte Deckschichtoberfläche (33) geschaffen werden kann. Nach einer ausreichenden Verbindung des Basisleders (2) mit einer Ausgleichsschicht (3) und der Abdeckschicht (6) wird der Träger (15) von einer Abdeckschicht (6) abgezogen und die der Ausgleichsschicht (3) abgewandt angeordnete Oberfläche der Abdeckschicht (6) ist sichtbar. Es ist auch möglich, die Ausgleichsschicht (3) mit der Abdeckschicht (6) ohne Verwendung eines Trägers (15) zu verbinden und als Kombinationsprodukt auf das Basisleder (2) aufzubringen.

Es ist auch möglich, die Beschichtung des Basisleders (2) statt mit einer Tischpresse (22) mit einem Kalander (34) zu beschichten. Zu diesem Zwecke ist ein mit einer Heizung (24) versehener Kalander (34) gegenüber einer Andruckwalze (36) angeordnet. Zwischen der Andruckwalze (36) und dem Kalander (34) befindet sich eine Fuge (31), dessen Höhe der Dicke eines Basisleders (2) entspricht. Durch die Fuge (31) erstreckt sich der mit der Deckschicht (1) versehene Träger (15), auf dessen Deckschichtoberfläche (33) das zu beschichtende Basisleder (2) aufgelegt wird. Mit Hilfe des in Transportrichtung (32) transportierten Trägers (15) wird auch das auf dem Träger (15) transportierte Basisleder in die Fuge (31) zwischen den Kalander (34) und die Andruckwalze (36) gezogen. Die Drehzahl sowohl des Kalanders (34) als auch der Andruckwalze (36) ist so festgelegt, daß das Basisleder (2) innerhalb der Fuge (31) solange verweilt, bis die Ausgleichsschicht (3) aufgrund der Erwärmung durch die Heizung (24) so weich geworden ist, daß sie eine Verbindung mit der Basislederoberfläche (4) eingehen kann. Um eine reibungslose Abwicklung des Basisleders (2) im Bereich der Andruckwalze (36) gewährleisten zu können, ist die Andruckwalze (36) an ihrem Umfang mit einer Kalanderbeschichtung (35) versehen, die ein Anhaften des Basisleders (2) verhindert, wenn das Basisleder (2) die Fuge (31) passiert.

Nach dem Durchlauf des Basisleders (2) durch die Fuge (31) ist das Basisleder (2) auf seine' dem Kalander (34) zugewandten Unterseite mit einer Deckschicht (1) behaftet. Nunmehr kann das fertiggestellte Basisleder (2) von den Träger (15) abgenommen und in ein Lager (30) eingelegt werden.

## Ansprüche

1. Leder, das im Bereich mindestens einer seiner Oberflächen eine ein Basisleder bedeckende Beschichtung aufweist, dadurch gekennzeichnet, daß die Beschichtung aus einem auf das Basisleder (2) aufbringbaren Kunststoff besteht, dem eine seine Härte erhöhende Armierung beigegeben ist.

2. Leder nach Anspruch 1, dadurch gekennzeichnet, daß der Kunststoff als ein hot melt ausgebildet ist.

3. Leder nach Anspruch 1 und 2, dadurch gekennzeichnet, daß der Kunststoff als ein schäumender Kunststoff ausgebildet ist.

4. Leder nach Anspruch 1 bis 3, dadurch gekennzeichnet, daß der Kunststoff mit einem einen Schaumstoff enthaltenden Kleber auf die ihm zugewandte Oberfläche (4) des Basisleder (2) geklebt ist.

5. Leder nach Anspruch 1 bis 4, dadurch gekennzeichnet, daß die Armierung als eine aus Fäden (50) bestehender Zusatz ausgebildet ist.

6. Leder nach Anspruch 5, dadurch gekennzeichnet, daß die Fäden eine Feinheit zwischen 2 und 15 d tex besitzen.

7. Leder nach Anspruch 5 und 6, dadurch gekennzeichnet, daß die Fäden (50) mindestens teilweise aus einem Polymer bestehen.

8. Leder nach Anspruch 7, dadurch gekennzeichnet, daß die Fäden (50) mindestens teilweise aus Polyamid bestehen.

9. Leder nach Anspruch 7, dadurch gekennzeichnet, daß die Fäden (50) mindestens teilweise aus Polyester bestehen.

10. Leder nach Anspruch 7 bis 31, dadurch gekennzeichnet, daß die Fäden (50) mindestens teilweise aus einem aus Stahl hergestellten Gewebe bestehen.

11. Leder nach Anspruch 1 bis 10, dadurch gekennzeichnet, daß der Kunststoff aus einer ersten Schicht besteht, auf die eine sie auf ihrer vom Basisleder (2) abgewandten Oberfläche abdeckende zweite Schicht aufgebracht ist.

12. Leder nach Anspruch 11, dadurch gekennzeichnet, daß die auf das Basisleder (2) aufgebrachte erste Schicht aus einem hot melt besteht.

13. Leder nach Anspruch 11 und 12, dadurch gekennzeichnet, daß die erste Schicht einen Schaumteppich bildet, der gegen das Basisleder (2) gepreßt ist und einen Ausgleich für in der Oberfläche (4) des Basisleders (2) etwa vorhandene Unebenheiten (5) bildet.

14. Leder nach Anspruch 11 bis 13, dadurch gekennzeichnet, daß die auf die Oberfläche der ersten Schicht aufgebrachte zweite Schicht aus einem Polyurethan besteht.

15. Leder nach Anspruch 11 bis 14, dadurch gekennzeichnet, daß die zweite Schicht mit ihrer von der ersten Schicht abgewandten Oberfläche auf einem Träger (15) haftet.

16. Leder nach Anspruch 1 bis 15, dadurch gekennzeichnet, daß die Armierung in die erste Schicht eingelegt ist.

17. Leder nach Anspruch 16, dadurch gekennzeichnet, daß die erste Schicht beim Einlegen der Armierung eine die Armierung durchdringende niedrigviskose Konsistenz bei einer Schmelzpunkttemperatur eines die erste Schicht bildenden Materials aufweist.

18. Leder nach Anspruch 1 bis 17, dadurch gekennzeichnet, daß die Armierung einen Schmelzpunkt aufweist, der oberhalb eines vom Kunststoff vorgegebenen Erweichungsbereiches liegt.

19. Leder nach Anspruch 1 bis 18, dadurch gekennzeichnet, daß die Armierung aus nicht metallischen Werkstoffen im entstehenden Gemisch einen Gewichtsanteil von etwa 2 bis 15 % des Kunststoffes besitzt.

20. Verfahren zum Herstellen eines Leders, auf das im Bereich mindestens einer seiner Oberflächen eine ein Basisleder bedeckende Beschichtung gemäß Ansprüchen 1 bis 19 aufgetragen wird, dadurch gekennzeichnet, daß die Beschichtung aus einem Kunststoff hergestellt wird, in den eine Armierung gleichmäßig verteilt wird.

21. Verfahren nach Anspruch 20, dadurch gekennzeichnet, daß die Armierung vor dem Aufbringen des Kunststoffes in diesen verteilt wird.

22. Verfahren nach Anspruch 20, dadurch gekennzeichnet, daß die Armierung nach dem Aufbringen des Kunststoffes in diesem verteilt wird.

23. Verfahren nach Anspruch 20 bis 22, dadurch gekennzeichnet, daß Fäden (50) zu einer Armierung in Form eines Vließes (54) vereinigt werden, das in den aufgebrachten Kunststoff eingelegt wird.

24. Verfahren nach Anspruch 20 bis 23, dadurch gekennzeichnet, daß die Beschichtung aus einer ersten und einer zweiten Schicht hergestellt wird, von denen die erste Schicht auf das Basisleder (2) aufgetragen wird und die zweite Schicht auf eine dem Basisleder (2) abgewandte Oberfläche (7) der ersten Schicht (3) aufgetragen wird.

25. Verfahren nach Anspruch 20 bis 24, dadurch gekennzeichnet, daß die zweite Schicht (6) auf einen Träger (15) aufgetragen wird und die erste Schicht (3) auf eine dem Träger (15) abgewandte Oberfläche der zweiten Schicht (6) aufgetragen wird, und daß die erste Schicht (3) mit ihrer der zweiten Schicht (6) abgewandten Oberfläche mit dem Basisleder (2) verbunden wird und anschließend der Träger (15) von der zweiten Schicht (6) abgezogen wird.

26. Verfahren nach Anspruch 25, dadurch gekennzeichnet, daß die zweite Schicht (6) über eine Releaseschicht auf den Träger (15) aufgetragen wird.

27. Verfahren nach Anspruch 24 bis 26, dadurch gekennzeichnet, daß mindestens in einer der beiden Schichten (3, 6) eine Armierung eingebracht wird.

28. Verfahren nach Anspruch 24 bis 27, dadurch gekennzeichnet, daß als erste Schicht (3) ein hot melt auf die zweite Schicht (6) aufgetragen wird, in die während ihres niedrigviskosem Zustandes Fäden (50) eingebracht werden.

50

51

Fig. 1

52

Fig. 2

53

Fig. 3

54

Fig. 4

8    14

13

11

7

9

4

5

6

1

3

2

Fig. 5

Fig. 6

Fig. 7

Fig. 8

Fig. 9

Fig. 10